# EUROPÄISCHE PATENTSCHRIFT

(11) **EP 0 657 549 B1**
(45) Veröffentlichungstag und Bekanntmachung des Hinweises auf die Patenterteilung: **30.06.2004**
(21) Anmeldenummer: 94890201.0
(22) Anmeldetag: 05.12.1994
(51) Int. Cl.: C21B 13/12, C21C 5/52

(54) **Verfahren zum Herstellen einer Eisenschmelze**
Process for producing an iron melt
Procédé de production d'une fonte d'acier

(30) Priorität: 10.12.1993 AT 249593
(43) Veröffentlichungstag der Anmeldung: 14.06.1995
(73) Patentinhaber: VOEST-ALPINE INDUSTRIEANLAGENBAU GMBH, 4020 Linz (AT)
(72) Erfinder: Fritz, Ernst, Dipl.-Ing., A-4020 Linz (AT); Dimitrov, Stefan, Dr. Dipl.-Ing., A-4030 Linz (AT)
(74) Vertreter: Kopecky, Helmut, Dipl.-Ing.

(56) Entgegenhaltungen:
- EP-A- 0 087 405
- EP-A- 0 115 756
- EP-A- 0 418 656
- EP-A- 0 579 591
- EP-A- 0 637 634
- DD-A- 228 831
- FR-A- 2 634 787
- Walden K. et al., aus "Production and use of DRI at HSW, 16th Adv. Technology Symposium Alternate Iron Source for the EAF", May 1993, Myrthle Beach
- Hassig M., aus "Enhancement of EAF Performance by Injection Technology", McMaster University, Hamilton, Ontario, May 24-26, 1994

## Beschreibung

Die Erfindung betrifft ein Verfahren zum Herstellen einer Eisenschmelze, insbesondere einer Stahlschmelze, in einem Reaktor mit Stromzufuhr, wie z.B. einem Elektro-Lichtbogenofen, sowie eine Anlage zur Durchführung des Verfahrens.

Es ist intern bekannt, bei der Stahlherstellung sich bildende Filterstäube mit Hilfe eines Inertgases durch Hohlelektroden in einen Elektro-Lichtbogenofen zur Herstellung von Stahl einzubringen. Hierbei hat sich jedoch gezeigt, daß eine Verwertung der Filterstäube, d.h. deren Verarbeitung zu Stahl, nicht möglich ist und ein großer Anteil der Filterstäube den Elektro-Lichtbogenofen mehr oder weniger unverändert wieder verläßt, so daß die aus den Filterstäuben resultierende Belastung der Umwelt nahezu unverändert weiter besteht.

Aus der EP-A - 0 418 656 ist ein Verfahren zum Beaufschlagen einer Metallschmelze mit einem Gas und feinkörnigen Feststoffen bekannt, bei dem ein Gas durch eine erste Lanze und die Feststoffe als Förderstrom über eine zweite Lanze so zugeführt werden, daß sie nach dem Verlassen der Austrittsöffnung der zweiten Lanze von aus der ersten Lanze austretendem Gas umgelenkt und mit diesem der Metallschmelze zugeführt werden, ohne daß es durch Abwandern von Feststoffen in oberhalb der Metallschmelze gelegene Bereiche zu nennenswerten Verlusten kommt.

Das Gas tritt hierbei mit einer im Überschallbereich liegenden Geschwindigkeit aus der ersten Lanze aus, wodurch die Feststoffe nicht nur gegen die Oberfläche der Metallschmelze, sondern in die Metallschmelze hinein gefördert werden. Hierbei tritt jedoch im Falle des Herstellens von Stahl der Nachteil einer endothermen Reaktion auf. Es kommt zur Bildung von Eisenoxid und Kohlenmonoxid. Da der Metallschmelze hierbei Temperatur entzogen und der Kohlenstoff nur zu CO umgesetzt wird, kann die eingebrachte Kohle nur sehr limitiert als Energieträger fungieren; eine vollständige Reduktion ist hier nur bei hohen Kohlenstoffgehalten und -verbräuchen möglich. Die pro Einblasstelle einzubringende Feststoffmenge ist wegen der ungünstigen örtlichen Energiebildung sehr begrenzt.

Aus der EP-A-0 637 634 ist ein Verfahren zum Herstellen einer Metallschmelze, insbesondere einer Stahlschmelze, in einem Elektro-Lichtbogenofen bekannt, bei dem die Badoberfläche während der Flachbadperiode(n) mit einer Schaumschlacke bedeckt ist. Um die Vorteile eines von einer Schaumschlacke umhüllten Lichtbogens über eine große Zeitspanne mit möglichst geringem Aufwand sicherzustellen, wird während einer Ofencharge mehrmals eine Pegelmessung der Schichthöhe einer Schlacke durchgeführt, und durch Ein- und/oder Aufblasen von Feststoffen, Gasen oder eines Gemisches von Feststoffen und Gasen in und/oder auf die Schlacke oder die Metallschmelze eine einen von mindestens einer Elektrode gebildeten Lichtbogen einhüllende Schaumschlacke gebildet, deren Schichthöhe so bemessen ist, daß sich die Schaumschlacke mindestens über den gesamten Lichtbogen erstreckt. Mit der Verarbeitung von feinkörnigen Eisenträgern setzt sich die EP-A-0 637 634, im Gegensatz zur EP-A-0 418 656, nicht näher auseinander.

Die Erfindung bezweckt die Vermeidung dieser Nachteile und Schwierigkeiten und stellt sich die Aufgabe, ein Verfahren der eingangs beschriebenen Art sowie eine Anlage zur Durchführung des Verfahrens zu schaffen, welche eine besonders wirtschaftliche Verwertung von feinkörnigen Eisenträgern, insbesondere von Hüttenstäuben, auch in großen Einsatzmengen ermöglichen, u.zw. unter Minimierung des Energieeinsatzes, wobei Verluste durch Abwandern der feinkörnigen Eisenträger aus dem Elektroofen in unveränderter Form weitestgehend vermieden werden, so daß die Verwertung der Filterstäube ohne jede Umweltbelastung möglich ist.

Diese Aufgabe wird erfindungsgemäß durch die Merkmale des Anspruches 1 gelöst:

Von Bedeutung für die Erfindung ist das Einbringen der feinkörnigen Stoffe in die Schaumschlacke, da es hierdurch gelingt, eine Rückreduzierung des beim Reduzieren der Eisenträger entstehenden CO₂ zu vermeiden, wodurch eine wesentliche Energieeinsparung erzielbar ist. Die Eisenschmelze stellt entweder eine Rest-Stahlmenge aus der vorherigen Schmelzperiode dar oder wird zuvor durch Einschmelzen von stückigen Eisenträgern (gegebenenfalls mit Zuführung von flüssigen Eisenträgern) erzeugt. Als kohlenstoffhältiges Einsatzmaterial kommen auch Kunststoffe und Graphit in Frage.

Vorzugsweise wird zur Verfahrensbeschleunigung inertes und/oder reduzierendes und/oder oxidierendes Gas direkt in die Eisenschmelze eingeleitet, vorzugsweise von unten.

Ein effizienter Verfahrensablauf kann dadurch erzielt werden, daß die feinkörnigen Eisenträger, die feinkörnigen kohlenstoffhältigen Reduktionsmittel und Energieträger in mehreren örtlich begrenzten Umfangsbereichen des Reaktors eingebracht werden.

Zur Erzielung einer Kontinuität des erfindungsgemäßen Verfahrens wird vorteilhaft die Schichthöhe der Schaumschlacke auf einen vorbestimmten Mindestwert gehalten, vorzugsweise auf Einhaltung des Mindestwertes geregelt, wobei zweckmäßig während einer Ofencharge mehrmals oder kontinuierlich eine Pegelmessung der Schichthöhe der Schaumschlacke durchgeführt wird und durch Ein- und/oder Aufblasen von Feststoffen, Gasen oder eines Gemisches von Feststoffen und Gasen in und/oder auf die Schaumschlacke oder die Eisenschmelze eine, einen von mindestens einer Elektrode gebildeten Lichtbogen einhüllende Schaumschlacke gebildet wird, deren Schichthöhe so bemessen ist, daß sich die Schaumschlacke mindestens über den gesamten Lichtbogen erstreckt.

Das erfindungsgemäße Verfahren ermöglicht die Verwertung großer Mengen feinkörniger Eisenträger. Die Blasrate je Minute für die feinkörnigen Eisenträger liegt zweckmäßig zwischen einem Tausendstel und einigen Hundertstel des Abstichgewichtes des Reaktors, . u.zw. vorteilhaft zwischen 20 kg/min und 2000 kg/min.

Mit dem erfindungsgemäßen Verfahren ist es möglich, feinkörnige Eisenträger in einer Menge bis zu 80 % des Gewichtes des Gesamteinsatzes des Reaktors einzubringen. Beim Arbeiten mit Restschmelze im Ofen kann der gesamte Abstich von den feinkörnigen Eisenträgern stammen.

Vorteilhaft werden die feinkörnigen Materialien pneumatisch zugeführt, wobei als Fördergas Sauerstoff, Luft, Stickstoff, Argon, Kohlenwasserstoffe, wie Erdgas, Wasserdampf, Kohlendioxid oder Gemische dieser Gase eingesetzt werden.

Gemäß einer bevorzugten Ausführungsform werden feinkörnige Eisenträger und gegebenenfalls feinkörnige kohlenstoffhältige Materialien mittels eines Trägergases über mindestens eine Hohlelektrode eingeblasen.

Zweckmäßig werden feinkörnige Eisenträger und feinkörnige kohlenstoffhältige Materialien mittels eines Trägergases über mindestens eine die Seitenwand des Reaktors durchsetzende Seitenlanze und/oder ein Düsenpaar in die auf der Oberfläche der Eisenschmelze gebildete Schaumschlacke eingeblasen, wobei Sauerstoff oder sauerstoffhältige Gase über mindestens eine die Seitenwand des Reaktors durchsetzende Seitenlanze und/oder Düse in die Schaumschlacke eingeblasen wird (werden).

Stückige Materialien lassen sich ebenfalls mit dem erfindungsgemäßen Verfahren verwerten. Diese werden vorteilhaft über eine im Ofendeckel vorgesehene Öffnung bzw. mehrere Öffnungen eingebracht.

Zweckmäßig wird die fühlbare Wärme heißer, aus dem Elektro-Lichtbogenofen entweichender Abgase zum Vorheizen zumindest eines Teiles der in den Elektro-Lichtbogenofen eingebrachten Feststoffe und/oder eingeleiteten Gase verwendet.

Gemäß einer weiteren bevorzugten Ausführungsform erfolgt unter Anwendung einer Anlage, welche einen Reaktor mit oder ohne Schmelzreduktionsteil aufweist, die Herstellung von Flüssigstahl kontinuierlich oder semikontinuierlich.

Eine Anlage zur Durchführung des Verfahrens ist durch die Merkmale des Anspruche 15 gekennzeichnet.

Gemäß einer bevorzugten Ausführungsform sind das zugeführte Gas und die zugeführten Feststoffe mittels mindestens einer die Seitenwand des Reaktors durchsetzenden Seitenlanze zuführbar, wobei die Seitenlanze bis zur Mündung getrennte Strömungsquerschnitte für das Gas und die Feststoffe aufweist.

Eine weitere bevorzugte Ausführungsform ist dadurch gekennzeichnet, daß mindestens eine Elektrode mit einer zentralen Längsausnehmung, in die eine feinkörnige Feststoffe und/oder Gas zuführende Leitung einmündet, vorgesehen ist.

Vorteilhaft sind im Boden des Reaktors Düsen oder Spülsteine vorgesehen. Die Düsen sind vorzugsweise mit Erdgas geschützt.

Zur Aufrechterhaltung einer Schaumschlacke mit einer bestimmten Mindesthöhe ist vorteilhaft eine Pegelmeßeinrichtung zum Messen der Schichthöhe der auf der Eisenschmelze befindlichen Schaumschlacke mit einer Regelstrecke vorgesehen, die mit der Zuführeinrichtung für die Feststoffe und/oder Gase und/oder Feststoff-Gasgemische gekoppelt ist.

Zweckmäßig sind die Mündungen der Gaszuführungseinrichtungen und die Mündungen der Zuführeinrichtungen für die feinkörnigen Eisenträger, Reduktionsmittel und Energieträger schräg nach unten gegen die Bodendüsen gerichtet.

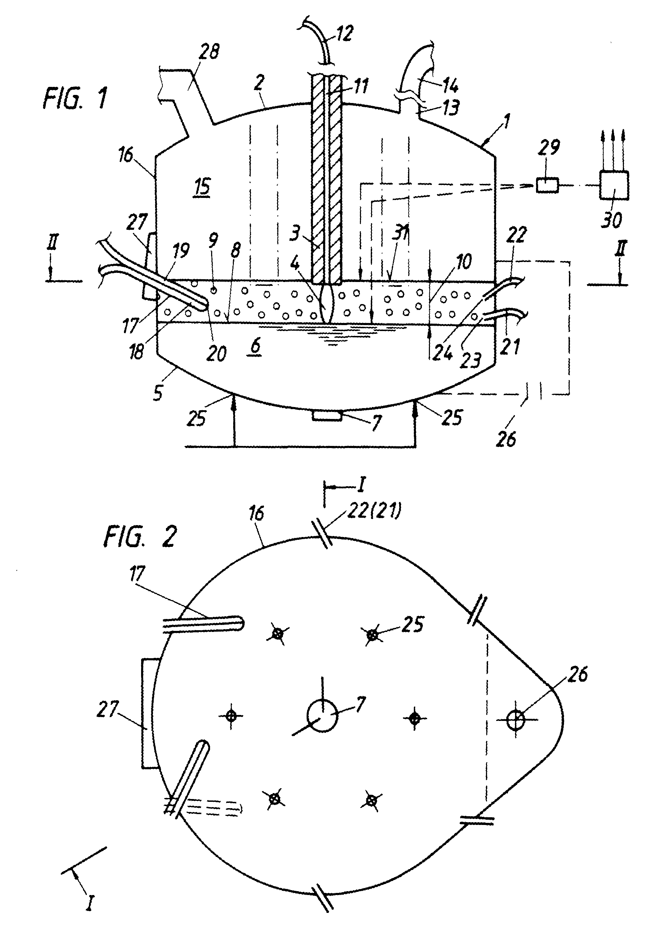

Die Erfindung ist nachfolgend anhand eines Ausführungsbeispieles näher erläutert, wobei die Zeichnung einen erfindungsgemäßen Elektro-Lichtbogenofen in schematischer Darstellung zeigt. Fig. 1 veranschaulicht einen Vertikalschnitt durch einen erfindungsgemäßen Lichtbogenofen nach der Linie I-I der Fig. 2, Fig. 2 einen Horizontalschnitt desselben nach der Linie II-II der Fig. 1.

In einen Elektro-Lichtbogenofen 1 ragt von oben durch dessen Deckel 2 zentral eine selbstverzehrende Graphitelektrode 3, deren Lichtbogen 4 gegen eine den Boden 5 des Elektro-Lichtbogenofens 1 bedeckende Stahlschmelze 6 brennt. Im Boden 5 ist die Gegenelektrode 7 angeordnet. Bei der dargestellten Ausführungsform handelt es sich um einen Gleichstrom-Lichtbogenofen mit nur einer Elektrode. Es könnten jedoch auch mehrere selbstverzehrende Graphitelektroden 3 - wie dies strichpunktiert veranschaulicht ist - vorgesehen sein, die mit Wechsel- oder Drehstrom betrieben werden könnten.

Auf der Stahlbadoberfläche 8 befindet sich eine Schicht aus Schaumschlacke 9 mit einer vorbestimmten Schichthöhe 10. Die selbstverzehrende Graphitelektrode 3 ist als Hohlelektrode ausgebildet. Durch ihre innere zentrale Längsausnehmung 11, die zweckmäßig mit einer inneren Auskleidung aus Al₂O₃-haltigen Rohren (Korund, Sillimanit etc.) oder Stahl versehen ist, können über die Leitung 12 feinkörnige Feststoffe und/oder Gase oder Gemische aus Feststoffen und Gasen zugeführt werden, die dann unmittelbar in den Elektro-Lichtbogen 4 gelangen. Der Deckel 2 des Lichtbogenofens 1 weist noch eine Deckelöffnung 13 auf, durch die über die Zuleitung 14 zugeführte stückige Feststoffe, Stückkohle oder Koks, Stückerz, Filterstaubpellets- bzw. -briketts bzw. Zuschlagstoffe, in den Innenraum 15 des Elektro-Lichtbogenofens 1 eingebracht werden können.

Durch die Seitenwand 16 des Elektro-Lichtbogenofens 1 ragen eine oder mehrere gegenüber diesem entweder beweglich oder starr angeordnete und entweder durch Kühlwasser oder Kühlgas geschützte oder - wenn nicht geschützt - selbstverzehrende Lanzen 17 in den Innenraum 15 des Elektro-Lichtbogenofens 1. Die Lanzen 17 sind in Betriebsposition schräg gegen den Boden 5 gerichtet. Sie können in der Seitenwand 16 beweglich angeordnet sein, u.zw. neigbar, schwenkbar und verschiebbar und rückziehbar. Auch ist ein stationärer Einbau in die Seitenwand 16 denkbar.

Die Lanzen 17 weisen jeweils bis zur Mündung 20 getrennte Strömungsquerschnitte 18, 19 für die Zuleitung von Gas und Feststoffen auf, so daß die mit einem gasförmigen Fördermedium zur Mündung 20 geförderten Feststoffe sich mit dem separat zugeführten Gas erst bei bzw. nach Austritt aus der Mündung mischen. Die Mündungen 20 der Lanzen 17 liegen während des Betriebs des Elektro-Lichtbogenofens 1 in einem Höhenbereich, über den sich die Schaumschlacke 9 erstreckt

In Ergänzung zu diesen Lanzen 17 weist der Elektro-Lichtbogenofen 1 seine Seitenwand 16 durchsetzende Düsenpaare 21, 22 auf, wobei die Mündungen 23, 24 der Düsenpaare 21, 22 ebenfalls in einem Höhenbereich liegen, über den sich die Schaumschlacke 9 erstreckt. Jeweils ein Düsenpaar 21, 22 wird von einer oberen Düse 22 und einer etwa vertikal unter dieser Düse 22 liegenden weiteren Düse 21 gebildet. Durch die obere Düse wird Sauerstoff bzw. ein sauerstoffhältiges Gas und durch die untere Düse 21 werden feinkörnige Feststoffe mit Hilfe eines Fördergases in das Innere 15 des Elektro-Lichtbogenofens 1 eingeleitet. Zweckmäßig sind die Düsen 21, 22 in der Seitenwand 16 ebenfalls beweglich angeordnet (neigbar und vorund rückziehbar).

Wie insbesondere aus Fig. 2 ersichtlich ist, werden - entsprechend der Anordnung der Lanzen 17 und der Düsen 21, 22 - die Gase bzw. Feststoffe über den Umfang etwa gleichmäßig verteilt in das Ofeninnere eingeleitet Anstelle der Lanzen könnten ebenfalls Düsenpaare 21, 22 angeordnet sein bzw. umgekehrt könnten auch die Düsen 21, 22 durch Lanzen 17 ersetzt werden.

Im Boden 5 des Elektro-Lichtbogenofens 1 sind vorzugsweise erdgasgeschützte Düsen 25 oder Spülsteine vorgesehen, durch die reduzierende oder oxidierende oder inerte Gase, die der Beschleunigung des Stahlherstellungsverfahrens durch eine Verstärkung der Badbewegung dienen, einleitbar sind. Hierdurch gelingt ein rascher Abbau von Temperatur- und Konzentrationsgefällen im Stahlbad 6 und insbesondere in der Schaumschlacke 9 sowie eine Beschleunigung des Stoffaustausches und Erhaltung eines quasi-stationären Prozeßablaufes. Bei Anwendung von O₂/Kohlenwasserstoff-Düsen hat sich der Hochdrucksauerstoff mit z.B. 20 bis 90 bar, wegen der guten Regelbarkeit, besonders gut bewährt.

Der Elektro-Lichtbogenofen 1 weist gemäß dem dargestellten Ausführungsbeispiel einen Bodenabstich 26 auf; es könnte jedoch auch ein Sifonabstich vorgesehen sein. Der Schlackenabstich ist mit 27 bezeichnet.

Das sich im Innenraum 15 des Elektro-Lichtbogenofens 1 bildende Abgas wird über eine Abgasleitung 28 einer nicht näher dargestellten Filteranlage zugeführt. Die fühlbare Wärme der Abgase kann in weiterer Folge zum Vorheizen zumindest eines Teiles der in den Elektro-Lichtbogenofen 1 chargierten Feststoffe und/oder eingeleiteten Gase verwendet werden, u.zw. ohne oder mit teilweiser Nachverbrennung der Abgase. Die Vorwärmung erfolgt, indem die Abgase durch geeignete Vorwärmeinrichtungen, wie z.B. einen Vorwärmschacht und/oder Wirbelbett- bzw. Drehrohrreaktoren und/oder andere Wärmetauscher, geleitet werden. Vor allem beim Einsatz von Eisenträgem mit einem geringen Reduktionsgrad (Erz, Filterstaub etc.) wird parallel zum Vorheizen auch eine zusätzliche Vorreduktion erzielt, welche den Wärmebedarf für ihre nächste Schmelzreduktion im Elektro-Lichtbogenofen 1 weiter senkt und außerdem - bei geeigneter Temperaturführung im Vorwärmer - zur teilweisen Kohlenstoff-Rückgewinnung für die Schmelzreduktion im Elektro-Lichtbogenofen durch C-Ausscheidung bzw. Aufkohlung der Eisenträger im Vorwärmer nach dem Bouduard-Gleichgewicht führt.

Die Höhe der Schaumschlacke 9 kann mittels einer Pegelmeßeinrichtung 29, die z.B. als Schallmeßeinrichtung, Hochtemperaturmeßeinrichtung oder eine Hochtemperatur-Videokamera oder als Hochtemperatur-Radar ausgebildet ist, erfaßt werden, wobei das Meßsignal der Pegelmeßeinrichtung zum Regeln der Höhe 10 der Schaumschlacke 9 herangezogen wird, beispielsweise indem es einer Regelstrecke 30 zugeführt wird, deren Ausgangssignale Regelorganen zur Regelung der eingebrachten Feststoffe und/oder Gase und/oder Gemische aus Feststoffen und Gasen übermittelt werden. Es könnte jedoch auch eine entsprechende Mitteilung an den Operator am Ofenleitstand übermittelt werden, worauf dieser Regelorgane in die entsprechende Stellung bringt.

Wichtig ist, daß der Lichtbogen 4 auch bei großer Länge über den größten Teil des Herstellverfahrens zur Gänze von Schaumschlacke umgeben ist, so daß die dort abgeschiedene Wärme sehr effektiv zum Ablauf der endothermen Schmelzreduktion genutzt werden kann, wodurch sich eine höhere Produktivität bei relativ niedrigem Strom- und Elektrodenverbrauch ergibt.

Zur Illustration des erfindungsgemäßen Verfahrensablaufes ist nachfolgend das Herstellen einer Stahlschmelze in einem Elektro-Lichtbogenofen unter Verwertung von in einem Hüttenbetrieb anfallendem eisenhältigem Filterstaub an einem konkreten Ausführungsbeispiel erläutert:

In einem 125 t DC-Elektro-Lichtbogenofen mit einer Hohlelektrode wurde Hütten-Filterstaub (Korngröße < 1 mm) mit der folgenden Zusammensetzung verarbeitet:

| Komponente | Gew.% |
|---|---|
| Feₜₒₜ (95 % oxidisch) | 66,0 |
| C | 6,0 |
| Cl | 0,5 |
| Ni | 0,04 |
| Alkali (Na, K) | 0,5 |
| Cu | 0,1 |
| Cr₂O₃ | 0,3 |
| CaO | 1,5 |
| SiO₂ | 1,2 |
| TiO₂ | 0,1 |
| ZnO | 1,5 |
| PbO | 0,5 |
| H₂O | 1,0 |

Neben diesem Filterstaub wurden folgende Reduktionsmittel bzw. Energieträger und Zuschlagstoffe eingesetzt:
- feinkörnige Kohle (Anthrazitkohle, Korngröße < 1,5 mm) mit der Zusammensetzung (in Gew.%):

| | | |
|---|---|---|
| 87,8 % C | 0,13 % CaO | 0,1 % MgO |
| 3,5 % SiO₂ | 2,5 % Al₂O₃ | 1,4 % H₂O |
| 0,4 % S | Rest: flüchtige Bestandteile | |

- weichgebrannter Kalk (Stückgröße 15 bis 40 mm) mit der Zusammensetzung (in Gew.%):

| | | |
|---|---|---|
| 92,5 % CaO | 1,5 % MgO | 1,3 % SiO₂ |
| 1,8 % Al₂O₃ | 0,2 % Fe₂O₃ | 1,5 % CO₂ |
| 1,0 % H₂O | 0,04 % S | |

- Flußspat (Stückgröße 10 bis 40 mm) mit der Zusammensetzung (in Gew.%):

| | | |
|---|---|---|
| 87,5 % CaF₂ | 3,0 % CaO | 5,0 % SiO₂ |
| 1,0 % Al₂O₃ | 2,0 % CO₂ | 1,1 % H₂O |
| 0,27 % S | | |

- Gase: O₂, Luft (trocken), N₂, Ar, CH₄

Die feinkörnigen Einsatzstoffe (Filterstaub und Kohle) wurden bis zu 100 % pneumatisch ins Bad 6 zugeführt. Die Zugabe der stückigen Schlackenbildner erfolgte über die Deckelöffnung 13.

Zur Durchführung des erfindungsgemäßen Verfahrens wurde ein 125 t DC-Elektro-Lichtbogenofen 1, wie in den Fig. 1 und 2 dargestellt, eingesetzt, der im Detail wie folgt ausgestattet war:
- Trafoleistung: 100 MVA (800 kVA/t flüssig)
- Elektrodenausführung: 1 Hohlelektrode 3 aus Graphit mit einer Innenauskleidung aus Korundrohr
- Einblaslanzen und -düsen: 2 wassergekülte, bewegliche Seitenlanzen 17 durch die Ofenwand für Staub + Kohle und/oder O₂
   4 erdgasgeschützte, tangential und fest eingebaute Düsen 21 in der Seitenwand 16 für Staub + Kohle (untere Düsenebene in Fig. 1)
   4 erdgasgeschützte, tangential und fest eingebaute Düsen 22 in der Seitenwand für O₂ (obere Düsenebene in Fig. 1)
   6 Bodendüsen 25 für N₂/Ar-umschaltbar (zur Verbesserung der Düsenhaltbarkeit wurde etwas CH₄ zugemischt)

Zunächst wurde in den leeren Ofen Stahlschrott (ein Korb) chargiert und mit der Elektrode unter Aufblasen von feinkörniger Kohle und O₂ niedergeschmolzen. Die Kohle wurde über die Lanzen 17 sowie durch die Düsen 21 der unteren Ebene eingeleitet, der Sauerstoff über die Lanzen 17 und die Düsen 22 der oberen Ebene. Anschließend wurde die Temperatur des entstandenen Stahlsumpfes (ca. 60 t) auf 1620°C erhöht, wobei sein C-Gehalt 0,15 % betrug. Die Menge der gebildeten Ofenschlacke betrug nach der Zugabe von Schlackenbildnern ca. 6 t. Unter diesen Badbedingungen wurde mit dem Einblasen von Filterstaub begonnen.

Es wurde ein Filterstaub-Kohle-Gemisch durch die Hohlelektorde 3, die Lanzen 17 sowie die Düsen 21 der unteren Düsenebene mit Hilfe von N₂-Trägergas unterhalb der Oberfläche 31 der Schaumschlacke 9, jedoch über der Oberfläche 8 des Stahlbades 6, eingeblasen. Die Einblasrate betrug 500 kg Filterstaub/min, so daß innerhalb von 40 min insgesamt 20 t Filterstaub eingeblasen wurden. Während des Staubeinblasens wurde über die Lanzen 17 und die Düsen 22 der oberen Düsenebene O₂ ebenfalls in die Schaumschlacke 9 eingeblasen. Hierdurch wird sowohl eine Oxidation der sogenannten "Verbrennungskohle" im Oxid + Kohle-Gemisch als auch eine teilweise Nachverbrennung des primär entstandenen CO aus der "Verbrennungskohle" und der Schmelzreduktion zu CO₂ innerhalb der Schaumschlacke erzielt, wodurch sich zusätzliche Wärmequellen zum Lichtbogen 4 ergeben.

Als Bodenspülgas wurde N₂ + CH₄ durch die Bodendüsen 25 eingeleitet. Durch die Deckelöffnung 13 wurde Stückkalk zugegeben.

Während der gesamten Staubeinblasperiode wurde eine gut schäumende Schlacke 9 erzielt, welche nahezu über die gesamte Staubeinblasperiode den Lichtbogen 4 vollständig umgab. Die folgenden Badbedingungen wurden erzielt:

| | |
|---|---|
| Temperatur | 1600 ± 20°C |
| (% C) | 0,07 ± 0,03 |
| (% FeOₙ) | 20 ± 5 |
| (% CaO)/(% SiO₂) | 2,2 ± 0,2 |
| Dicke der Schaumschlackenschicht | 600 - 900 mm |
| DC-Lichtbogenlänge (bei durchschnittlich 600 V und 100 kA) | ca. 700 mm |

Die Ergebnisse aus der Versuchsschmelze hinsichtlich Einsatzstoffe, Produkte und Elektroenergieverbrauch während des Einblasens von Filterstaub können wie folgt zusammengefaßt werden:

| | Betriebsparameter | Verbrauch | |
|---|---|---|---|
| | | pro t Filterstaub | pro min Einblasdauer |
| A) | Einsatzstoffe (alle bei 25°C) | | |
| | 1) Filterstaub | 1000 kg | 500 kg |
| | 2) Kohlenstaub | 85 kg | 42,5 kg |
| | 3) O₂ | 25 Nm³ | 12,5 Nm³ |
| | 4) N₂ (Trägergas/Bodenspülung) | 110/3 Nm³ | 55/1,5 Nm³ |
| | 5) Kalk | 20 kg | 10 kg |

| B) | Produkte (alle bei 1600°C) | | |
|---|---|---|---|
| | 1) Flüssigstahl (0,07 % C) | 654 kg | 327 kg |
| | 2) Schlacke (% FeOₙ = 20 %, % CaO/% SiO₂ = 2,2) | 73 kg | 36,5 kg |
| | 3) Abgas (CO-Nachverbrennungsgrad = 20 %) | 384 Nm³ | 192 Nm³ |

| C) | Elektroenergieverbrauch | 1420 kWh | 710 kWh |
|---|---|---|---|
| | | | |

Am Ende der Filterstaub-Einblasperiode betrug die Stahlmenge im Ofen ca. 73 t. Die Schlackenmenge betrug ca. 7,5 t.

Während die Schmelzreduktion der zugeführten Eisenträger erfindungsgemäß bevorzugt bei einer Temperatur zwischen ca. 1500 und 1650°C kontinuierlich abläuft, wird die Schaumschlacke 9 über den Schlackenabstich 27 bzw. die erzeugte Stahlschmelze 6 über den Bodenabstich 26 von Zeit zu Zeit teilweise abgestochen (mit Unterbrechung der Zuführung von Strom und feinkörnigen Feststoffen wegen des durch den Elektro-Lichtbogenofen bedingten diskontinuierlichen Prozeßablaufes), so daß eine gewisse Restschlacke bzw. ein gewisser Stahlsumpf als Minimalmenge für die störungsfreie Fortsetzung der Schmelzreduktion im Ofen verbleibt. Ein Stahlsumpf kann auch durch Erschmelzen von Eisenträgern (auch stückig) aufgebaut werden. Die erzeugte Stahlschmelze (Rohstahl) wird durch weitere sekundärmetallurgische Behandlung auf die zum Gießen erwünschte Zusammensetzung und Temperatur gebracht.

Wird das erfindungsgemäße Verfahren in einem herkömmlichen DC- oder AC-Elektro-Lichtbogenofen durchgeführt, ist ein diskontinuierlicher Verfahrensablauf zweckmäßig. Unter Anwendung einer einen Elektro-Lichtbogenofen oder Elektro-Lichtbogenofen-ähnlichen Schmelz- bzw. Schmelzreduktionsteil enthaltenden Anlage zur Herstellung von Flüssigstahl ist ein kontinuierlicher oder semi-kontinuierlicher Verfahrensablauf ebenfalls möglich. Darüber hinaus kann das Verfahren auch in Kombination mit der üblichen Elektro-Lichtbogenofen-Fahrweise - als zusätzlicher Verfahrensschritt oder parallel zum Einschmelzen (von z.B. Schrott und/oder Eisenschwamm) und/oder Frischen bzw. Überhitzung der Schmelze im Flachbadbetrieb - angewendet werden.

Die feinkörnigen Eisenträger - insbesondere Hüttenstäube (Filterstaub vom Konverter, Elektro-Lichtbogenofen, Hochofen, von Schmelzreduktionsanlagen etc.), Feinerz mit oder ohne Vorreduktion, Eisenkarbid, DRE-fines, Zunder, getrockneter und zerkleinerter Schlamm etc. - können erfindungsgemäß bei der diskontinuierlichen Betriebsweise bis zu einem Anteil von 80 % des Gesamt-Eiseneinsatzes dem Elektro-Lichtbogenofen zugeführt werden und teilweise oder vollständig durch Verbindungen von Nichteisen-Metallen (z.B. Ni, Cr, Mo, Mn etc.) ersetzt werden.

Die feinkörnigen C-haltigen Reduktionsmittel bestehen bevorzugt aus Kohle, Koks, Graphit, Kunststoff, Holz etc. bzw. deren Gemischen. Preiswertes feinkörniges FeSi, Al oder andere Reduktionsmittel können ebenfalls zum Einsatz gebracht werden.

Die zugeführten Gase bestehen aus O₂, Luft, N₂, Ar, Erdgas oder anderen Kohlenwasserstoffen, H₂O (Dampf), CO₂ oder deren Gemischen. Kohlenwasserstoff kann auch in flüssigem Zustand zugeführt werden. Insbesondere Luft bzw. auch die Inertgase können vorgeheizt werden.

Erfindungsgemäß werden fossile Energieträger und elektrische Energie zur Deckung der erforderlichen Prozeßwärme zur Durchführung des Verfahrens kombiniert. Hierdurch ergibt sich die Möglichkeit zum Ersatz eines Großteils der benötigten elektrischen Energie bzw. zur Senkung des Stromverbrauches durch billigere Primärenergie; z.B. ergibt sich der Gesamtkohleverbrauch erfindungsgemäß aus der sogenannten "Reduktionskohle" (Umsatzkohle) und der sogenannten "Heizkohle" (Ersatz für Elektroenergie). Zusätzlich kann Energie mit Hilfe von auf bzw. in die Schlacke blasenden Nachverbrennungslanzen, die mit O₂ und/oder Luft betrieben werden, eingebracht werden.

Ein wesentlicher Vorteil des erfindungsgemäßen Verfahrens ist darin zu sehen, daß eine Verarbeitung und somit die Entsorgung von anfallenden Hüttenstäuben unter gleichzeitiger Rückgewinnung und/oder Anreicherung ihrer Bestandteile (Anreicherung auf Konzentrationen, bei welchen die Weiterentsorgung der Abfallstoffe wirtschaftlich verwirklicht werden kann) möglich ist. Eine Anwendungsmöglichkeit des erfindungsgemäßen Verfahrens ist die Entsorgung von giftigen bzw. die Umwelt belastenden Abfallstoffen, wie Schreddermüll, Kunststoffgranulat, getrocknete Fäkalien etc., inklusive Rückgewinnung ihrer wertvollen Bestandteile unter Ausnützung ihres Energieinhaltes..

## Patentansprüche

1. Verfahren zum Herstellen einer Eisenschmelze (6), insbesondere einer Stahlschmelze (6), in einem Reaktor mit Stromzufuhr, wie z.B. einem Elektro-Lichtbogenofen (1), welches die Kombination folgender Merkmale aufweist :
• daß in dem Reaktor (1) eine Eisenschmelze (6) vorgesehen wird,
• daß auf der Eisenschmelze (6) eine Schaumschlacke (9) vorgesehen und aufrechterhalten wird,
• daß feinkörnige Eisenträger, wie Hüttenstäube, Feinerz, Eisenkarbid, Staub aus der Erzeugung von direktreduziertem Eisen, Zunder, getrocknete Hüttenschlämme etc. kontinuierlich oder diskontinuierlich in die Schaumschlacke (9) eingeleitet werden,
• daß feinkörnige, kohlenstoffhältige Reduktionsmittel, wie Kohle, Koks, Graphit, Kunststoffe, Holz etc. kontinuierlich oder diskontinuierlich in die Schaumschlacke (9) zugeführt werden und
• daß zur Deckung der erforderlichen Prozeßwärme zusätzlich feinkörnige, kohlenstoffhältige Energieträger kontinuierlich oder diskontinuierlich in die Schaumschlacke (9) eingeleitet werden,
• daß sich bei der Reduktion bildende Prozeßgase und kohlenstoffhaltige Energieträger zur weiteren Deckung der örtlich erforderlichen Prozeßwärme innerhalb der Schaumschlacke weitgehend zu CO₂ und H₂O verbrannt werden sowie
• der Verfahrensablauf durch Einleiten von Gasen und/oder Gasgemischen in die Eisenschmelze (6) beschleunigt wird,
wobei feinkörnige Eisenträger in örtlich begrenzten jeweils einen Reaktions raum bildenden Bereichen und die feinkörnigen kohlenstoffhältigen Reduktionsmittel sowie die feinkörnigen kohlenstoffhältigen Energieträger über eine Zuführungseinrichtung und Gas über eine eigene Zuführungseinrichtung ebenfalls in die jeweils gleichen Bereiche zugeführt werden.

2. Verfahren nach Anspruch 1, **dadurch gekennzeichnet, daß** zur Verfahrensbeschleunigung inertes und/oder reduzierendes und/oder oxidierendes Gas direkt in die Eisenschmelze (6) eingeleitet wird, und zwar von unten.

3. Verfahren nach Anspruch 1 oder 2, **dadurch gekennzeichnet, daß** die feinkörnigen Eisenträger, die feinkörnigen kohlenstoffhältigen Reduktionsmittel und Energieträger in mehreren örtlich begrenzten Umfangsbereichen des Reaktors (1) eingebracht werden.

4. Verfahren nach einem oder mehreren der Ansprüche 1 bis 3, **dadurch gekennzeichnet, daß** die Schichthöhe (10) der Schaumschlacke (9) auf einen vorbestimmten Mindestwert gehalten, vorzugsweise auf Einhaltung des Mindestwertes geregelt wird.

5. Verfahren nach Anspruch 4, **dadurch gekennzeichnet, daß** während einer Ofencharge mehrmals oder kontinuierlich eine Pegelmessung der Schichthöhe (10) der Schaumschlacke (9) durchgeführt wird und durch Ein- und/oder Aufblasen von Feststoffen, Gasen oder eines Gemisches von Feststoffen und Gasen in und/oder auf die Schaumschlacke (9) oder die Eisenschmelze (6) eine, einen von mindestens einer Elektrode (3) gebildeten Lichtbogen (4) einhüllende Schaumschlacke (9) gebildet wird, deren Schichthöhe (10) so bemessen ist, daß sich die Schaumschlacke (9) mindestens über den gesamten Lichtbogen (4) erstreckt.

6. Verfahren nach einem oder mehreren der Ansprüche 1 bis 5, **dadurch gekennzeichnet, daß** die feinkörnigen Eisenträger mit einer Blasrate je min zwischen einem Tausendstel und einigen Hundertstel des Abstichgewichtes des Reaktors (1) eingebracht werden.

7. Verfahren nach einem oder mehreren der Ansprüche 1 bis 6, **dadurch gekennzeichnet, daß** feinkörnige Eisenträger mit einer zwischen 20 kg/min und 2000 kg/min liegenden Blasrate eingeblasen werden.

8. Verfahren nach einem oder mehreren der Ansprüche 1 bis 7, **dadurch gekennzeichnet, daß** die feinkörnigen Eisenträger in einer Menge bis zu 80 % des Gewichtes des Gesamteinsatzes eingebracht werden.

9. Verfahren nach einem oder mehreren der Ansprüche 1 bis 8, **dadurch gekennzeichnet, daß** die feinkörnigen Materialien pneumatisch zugeführt werden, wobei als Fördergas Sauerstoff, Luft, Stickstoff, Argon, Kohlenwasserstoffe, wie Erdgas, Wasserdampf, Kohlendioxid oder Gemische dieser Gase eingesetzt werden.

10. Verfahren nach einem oder mehreren der Ansprüche 1 bis 9, **dadurch gekennzeichnet, daß** feinkörnige Eisenträger und gegebenenfalls feinkörnige kohlenstoffhältige Materialien mittels eines Trägergases über mindestens eine Hohlelektrode (3) eingeblasen werden.

11. Verfahren nach einem oder mehreren der Ansprüche 1 bis 10, **dadurch gekennzeichnet, daß** feinkörnige Eisenträger und feinkörnige kohlenstoffhältige Materialien mittels eines Trägergases über mindestens eine die Seitenwand (16) des Reaktors (1) durchsetzende Seitenlanze (17) und/oder ein Düsenpaar (21, 22) in die auf der Oberfläche (8) der Eisenschmelze (6) gebildete Schaumschlacke (9) eingeblasen werden, wobei Sauerstoff oder sauerstoffhältige Gase über mindestens eine die Seitenwand (16) des Reaktors (1) durchsetzende Seitenlanze (17) und/oder Düse (22) in die Schaumschlacke (9) eingeblasen wird (werden).

12. Verfahren nach einem oder mehreren der Ansprüche 1 bis 11, **dadurch gekennzeichnet, daß** zusätzlich stückige Materialien, wie Stückkohle, Stückerz, direktreduziertes Eisen, Schrott und/oder Filterstaubpellets bzw. Filterstaubbriketts sowie Schlackenbildner, über eine im Ofendeckel (2) vorgesehene Öffnung (23) bzw. mehrere Öffnungen eingebracht werden.

13. Verfahren nach einem oder mehreren der Ansprüche 1 bis 12, **dadurch gekennzeichnet, daß** die fühlbare Wärme heißer, aus dem Elektro-Lichtbogenofen entweichender Abgase zum Vorheizen zumindest eines Teiles der in den Reaktor (1) eingebrachten Feststoffe und/oder eingeleiteten Gase verwendet wird.

14. Verfahren nach einem oder mehreren der Ansprüche 1 bis 13, **dadurch gekennzeichnet, daß** unter Anwendung einer Anlage, welche einen Reaktor mit oder ohne Schmelzreduktionsteil aufweist, die Herstellung von Flüssigstahl kontinuierlich oder semikontinuierlich erfolgt.

15. Anlage zur Durchführung des Verfahrens nach einem oder mehreren der Ansprüche 1 bis 14, die die Kombination folgender Merkmale aufweist :
• einen Reaktor mit Stromzuführung, wie einen Elektro-Lichtbogenofen (1), mit mindestens einer Elektrode (3),
• Zuführeinrichtungen (17, 21) für feinkörnige Eisenträger, feinkörnige kohlenstoffhältige Reduktionsmittel und feinkörnige kohlenstoffhältige Energieträger, deren Auslaßöffnungen (20, 23) in einem Höhenbereich des Reaktors (1) angeordnet sind, in dem dieser im Betrieb eine Schicht von Schaumschlacke (9) aufweist, und
• daß in der Nähe der Zuführeinrichtungen (17, 21) für die feinkörnigen Feststoffe Gaszuführungseinrichtungen (17, 22) vorgesehen sind, deren Mündungen (20, 24) ebenfalls in dem Höhenbereich liegen, über den sich die Schaumschlacke (9) erstreckt,
• wobei als Zuführeinrichtungen (17, 21) Lanzen (17) mit bis zur Mündung getrennten Strömungsquerschnitten für das Gas und dis Feststoffe und/oder Düsen paare (21, 22) vorgesehen sind, wobei die Mündungen (24) der Gaszuführungseinrichtungen (22) und die Mündungen (23) der Feststoffzuführungseinrichtungen (21) in örtlich begrenzten, jeweils einen Reaktionsraum bildenden Bereichen liegen.

16. Anlage nach Anspruch 15, **dadurch gekennzeichnet, daß** das zugeführte Gas und die zugeführten Feststoffe mittels mindestens einer die Seitenwand (16) des Reaktors (1) durchsetzenden Seitenlanze (17) zuführbar sind, wobei die Seitenlanze (17) bis zur Mündung (20) getrennte Strömungsquerschnitte (18, 19) für das Gas und die Feststoffe aufweist.

17. Anlage nach einem der Ansprüche 15 und 16, **dadurch gekennzeichnet, daß** mindestens eine Elektrode (3) mit einer zentralen Längsausnehmung (11), in die eine feinkörnige Feststoffe und/oder Gas zuführende Leitung (12) einmündet, versehen ist.

18. Anlage nach einem oder mehreren der Ansprüche 15 bis 17, **dadurch gekennzeichnet, daß** im Boden (5) des Reaktors (1) Düsen (25), vorzugsweise mit Kohlenwasserstoff geschützte Düsen (25), oder Spülsteine vorgesehen sind.

19. Anlage nach einem oder mehreren der Ansprüche 15 bis 18, **dadurch gekennzeichnet, daß** eine Pegelmeßeinrichtung (29) zum Messen der Schichthöhe (10) der auf der Eisenschmelze (6) befindlichen Schaumschlacke (9) mit einer Regelstrecke (30) vorgesehen ist, die mit der Zuführeinrichtung (13, 17, 21, 22, 25) für die Feststoffe und/oder Gase und/oder Feststoff-Gasgemische gekoppelt ist.

20. Anlage nach einem oder mehreren der Ansprüche 15 bis 19, **dadurch gekennzeichnet, daß** die Mündungen (20, 24) der Gaszuführungseinrichtungen (17, 22) und die Mündungen (20, 23) der Zuführeinrichtungen (17, 2 1 ) für die feinkörnigen Eisenträger, Reduktionsmittel und Energieträger schräg nach unten gegen die Bodendüsen (25) gerichtet sind.

## Claims

1. A process for producing an iron melt (6), in particular a steel melt (6), in a reactor with current supply, such as an electric arc furnace (1), which process exhibits a combination of the following features:
• providing an iron melt (6) in said reactor (1),
• providing and maintaining a foamed slag (9) on said iron melt (6),
• introducing fine-grained iron carriers such as metallurgical dusts, fine ore, iron carbide, dust from the production of directly reduced iron, scales, dried metallurgical slurries, etc. continuously or discontinuously into said foamed slag (9),
• supplying fine-grained carbon-containing reducing agents such as coal, coke, graphite, synthetic materials, wood, etc. continuously or discontinuously into said foamed slag (9), and
• additionally introducing fine-grained carbon-containing energy carriers continuously or discontinuously into said foamed slag (9) for furnishing the required process heat,
• largely burning process gases forming during reduction and carbon-containing energy carriers to CO₂ and H₂O within said foamed slag for further furnishing the locally required process heat, and
• accelerating the process course by introducing gases and/or gas mixtures into said iron melt (6),
wherein fine-grained iron carriers are supplied in locally limited regions, each forming a reaction space, and the fine-grained carbon-containing reducing agents as well as the fine-grained carbon-containing energy carriers are supplied via a supply means and gas is supplied via a separate supply means also into the regions that are the same in each case.

2. A process according to claim 1, **characterized in that**, for process acceleration, an inert and/or reducing and/or oxidizing gas is directly injected into said iron melt (6) from below.

3. A process according to claim 1 or 2, **characterized in that** the fine-grained iron carriers, the fine-grained carbon-containing reducing agents and energy carriers are introduced in several locally limited peripheral regions of said reactor (1).

4. A process according to one or several of claims 1 to 3, **characterized in that** the layer height (10) of the foamed slag (9) is kept at a predetermined minimum value, preferably is controlled to keep said minimum value.

5. A process according to claim 4, **characterized in that** a level-measurement of the layer height (10) of the foamed slag (9) is carried out several times or continuously during a furnace heat and that, by blowing solids, gases or a mixture of solids and gases into and/or onto said foamed slag (9) or iron melt (6), a foamed slag (9) enveloping an electric arc (4) formed by at least one electrode (3) is formed, the layer height (10) of which is dimensioned such that said foamed slag (9) extends at least across the entire electric arc (4).

6. A process according to one or several of claims 1 to 5, **characterized in that** said fine-grained iron carriers are introduced at a blowing rate per minute that ranges between one thousandth and several hundredths of the tap weight of said reactor (1).

7. A process according to one or several of claims 1 to 6, **characterized in that** fine-grained iron carriers are blown in at a blowing rate ranging between 20 kg/min and 2000 kg/min.

8. A process according to one or several of claims 1 to 7, **characterized in that** said fine-grained iron carriers are introduced in an amount of up to 80 % of the overall charge weight.

9. A process according to one or several of claims 1 to 8, **characterized in that** the fine-grained materials are supplied pneumatically, wherein oxygen, air, nitrogen, argon, hydrocarbons such as natural gas, water vapour, carbon dioxide or mixtures of said gases are used as a conveying gas.

10. A process according to one or several of claims 1 to 9, **characterized in that** fine-grained iron carriers and optionally fine-grained carbon-containing materials are blown in by means of a carrier gas via at least one hollow electrode (3).

11. A process according to one or several of claims 1 to 10, **characterized in that** fine-grained iron carriers and fine-grained carbon-containing materials are blown into the foamed slag (9) formed at the surface (8) of the iron melt (6) by means of a carrier gas via at least one lateral lance (17) passing through the side wall (16) of said reactor (1) and/or a pair of tuyeres (21, 22), wherein oxygen or oxygen-containing gases is (are) blown into the foamed slag (9) via at least one lateral lance (17) and/or a tuyere (22) passing through the side wall (16) of said reactor (1).

12. A process according to one or several of claims 1 to 11, **characterized in that** in addition lumpy materials such as lump coal, lump ore, directly reduced iron, scrap and/or filter dust pellets or filter dust briquets, respectively, as well as slag formers are introduced through an opening (23) or several openings, respectively, provided in the furnace lid (2).

13. A process according to one or several of claims 1 to 12, **characterized in that** the sensible heat of hot offgases escaping from said electric arc furnace is used for preheating at least part of the solids and/or gases introduced into said reactor (1).

14. A process according to one or several of claims 1 to 13, **characterized in that**, by using a plant comprising a reactor with or without a melt reduction part, the production of molten steel is effected continuously or semi-continuously.

15. A plant for carrying out the process according to one or several of claims 1 to 14, which plant exhibits a combination of the following features:
• a reactor with current supply, such as an electric arc furnace (1), comprising at least one electrode (3),
• supply means (17, 21) for fine-grained iron carriers, fine-grained carbon-containing reducing agents and fine-grained carbon-containing energy carriers, the outlet openings (20, 23) of which are arranged on a height level of the reactor (1) where said reactor exhibits a layer of foamed slag (9) during operation, and
• that gas supply means (17, 22) are provided near said supply means (17, 21) for the fine-grained solids, the mouths (20, 24) of which also are on a height level across which the foamed slag (9) extends,
• wherein, as supply means (17, 21), lances (17) having flow cross sections for the gas and the solids that are separated up to the mouth and/or pairs of tuyeres (21, 22) are provided, wherein the mouths (24) of the gas supply means (22) and the mouths (23) of the solids supply means (21) are located in locally limited regions, each forming a reaction space.

16. A plant according to claim 15, **characterized in that** the supplied gas and the supplied solids can be supplied via at least one lateral lance (17) passing through the side wall (16) of said reactor (1), wherein the lateral lance (17) has flow cross sections (18, 19) for the gas and the solids that are separated up to the mouth (20).

17. A plant according to any of claims 15 and 16, **characterized in that** at least one electrode (3) is provided with a central longitudinal recess (11) into which a duct (12) supplying fine-grained solids and/or a gas runs.

18. A plant according to one or several of claims 15 to 17, **characterized in that**, in the bottom (5) of the reactor (1), tuyeres (25), preferably tuyeres (25) protected by hydrocarbon, or flushing bricks are provided.

19. A plant according to one or several of claims 15 to 18, **characterized in that** a level measuring means (29) for measuring the layer height (10) of the foamed slag (9) present on the iron melt (6) comprising a control loop (30) is provided, which control loop is coupled to the supply means (13, 17, 21, 22, 25) for the solids and/or gases and/or mixtures of solids and gases.

20. A plant according to one or several of claims 15 to 19, **characterized in that** the mouths (20, 24) of the gas supply means (17, 22) and the mouths (20, 23) of the supply means (17, 21) for the fine-grained iron carriers, reducing agents and energy carriers are directed obliquely downwards towards the bottom tuyeres (25).

## Revendications

1. Procédé pour produire une fonte de fer (6) et, plus particulièrement, une fonte d'acier (6) dans un réacteur avec une alimentation en courant, par exemple par un arc électrique (1), qui présente, en combinaison, les caractéristiques suivantes :
• une fonte de fer (6) est présente dans le réacteur (1),
• un laitier mousseux (9) est présent et maintenu sur la fonte de fer (6),
• un produit à granulométrie fine - tel que les poussières de sidérurgie, des minerais fins, du carbure de fer, de la poussière d'un processus de réduction directe, du mâchefer, des boues de métallurgie séchées, etc. - est introduit de manière continue ou discontinue dans le laitier mousseux (9),
• un produit réducteur, à granulométrie fine et contenant du carbone ― tel que le charbon, le coke, le graphite, des matières synthétiques, le bois etc. - est introduit de manière continue ou discontinue dans le laitier mousseux (9),
• un produit à granulométrie fine contenant de l'énergie sous la forme de carbone est introduit en plus, de manière continue ou discontinue dans le laitier mousseux (9), pour couvrir les besoins en chaleur du procédé,
• les gaz de procédé, se formant par réduction et le produit contenant de l'énergie sous la forme de carbone pour couvrir localement les besoins additionnels en chaleur du procédé sont brûlés essentiellement en CO₂ et en H₂O, à l'intérieur du laitier mousseux et
• le déroulement du procédé est accéléré par l'introduction de gaz et / ou de mélanges gazeux dans la fonte d'acier (6),
où le produit à granulométrie fine contenant du fer, le produit réducteur à granulométrie fine contenant du carbone ainsi que le produit à granulométrie fine contenant de l'énergie sous la forme de carbone sont acheminés par un dispositif d'alimentation propre sur des régions délimitées localement et constituant chacune un espace de réaction et où, le cas échéant, un gaz est acheminé par un dispositif d'alimentation vers les mêmes régions.

2. Procédé selon la revendication 1, **caractérisé en ce que**, pour accélérer le déroulement du processus, un gaz inerte et / ou un gaz réducteur et / ou un gaz oxydant est / sont introduits directement dans la fonte dé fer (6) et cela, concrètement, depuis le bas,

3. Procédé selon la revendication 1 ou la revendication 2, **caractérisé en ce que** le produit à granulométrie fine contenant du fer, le produit réducteur à granulométrie fine contenant du carbone et le produit contenant de l'énergie sont introduits en plusieurs régions périphériques délimitées localement, du réacteur (1).

4. Procédé selon une ou plusieurs des revendications 1 à 3, **caractérisé en ce que** la hauteur (10) de la couche de laitier mousseux (9) est ajustée à une valeur minimale et qu'ensuite, elle est, de préférence, maintenue à cette valeur minimale.

5. Procédé selon la revendication 4, **caractérisé en ce que**, durant un chargement du four, la hauteur (10) de la couche de laitier mousseux (9) est mesurée plusieurs fois ou de manière continue, **en ce que** - lors d'une introduction et / ou d'une évacuation de produits solides, de gaz ou d'un mélange de produits solides et de gaz dans et / ou hors de la couche de laitier mousseux (9) ou de la fonte de fer (6) - un arc électrique (4) provenant d'au moins une électrode (3) et entouré par le laitier mousseux (9) est produit et **en ce que** la hauteur (10) de la couche est choisie de manière à ce que le laitier mousseux (9) s'étende au moins sur toute la hauteur de l'arc électrique (10).

6. Procédé selon une ou plusieurs des revendications 1 à 5, **caractérisé en ce que** le produit à granulométrie fine contenant du fer est introduit avec un débit allant d'au moins un millième à plusieurs centièmes du poids de la coulée du réacteur (1).

7. Procédé selon une ou plusieurs des revendications 1 à 6, **caractérisé en ce que** le produit à granulométrie fine contenant du fer est introduit avec un débit situé entre 20 kg / min et 2000 kg / min.

8. Procédé selon une ou plusieurs des revendications 1 à 7, **caractérisé en ce que** le produit à granulométrie fine contenant du fer est introduit en une quantité allant jusqu'à 80 % du poids de la charge totale.

9. Procédé selon une ou plusieurs des revendications 1 à 8, **caractérisé en ce que** les produits à granulométrie fine sont amenés par des moyens pneumatiques avec comme gaz vecteur l'oxygène l'air, l'azote, l'argon, un hydrocarbure tel qu'un gaz naturel, la vapeur d'eau, le gaz carbonique ou un mélange de ces gaz.

10. Procédé selon une ou plusieurs des revendications 1 à 9, **caractérisé en ce que** le produit à granulométrie fine contenant du fer et éventuellement le produit à granulométrie fine contenant du carbone est / sont amenés au moyen d'un gaz vecteur arrivant via au moins une électrode creuse (3).

11. Procédé selon une ou plusieurs des revendications 1 à 10, **caractérisé en ce que** le produit à granulométrie fine contenant du fer et le produit à granulométrie fine contenant du carbone sont injectés au moyen d'un gaz vecteur par au moins une lance latérale (16) du réacteur (1) et / ou au moins par une paire de buses (21, 22), traversant la paroi latérale et débouchant dans le laitier mousseux (9) formé à la surface (8) de la fonte de fer (6) et **en ce que** de l'oxygène ou un gaz contenant de l'oxygène est injecté dans le laitier mousseux (9) par au moins une lance (17) et / ou au moins une buse (22) traversant la paroi latérale du réacteur (1).

12. Procédé selon une ou plusieurs des revendications 1 à 11, **caractérisé en ce qu'**un produit en morceaux, tel qu'un charbon en morceaux, un minerai en morceaux, un fer provenant d'une réduction directe, de la grenaille et / ou des agglomérés de poussières de filtres, des briquettes de poussières de filtres, ainsi que des scories sont introduits en plus, par une ou par des ouvertures (23) aménagées dans le couvercle (2).

13. Procédé selon une ou plusieurs des revendications 1 à 12, **caractérisé en ce que** le gaz de sortie qui provient de l'arc électrique et qui est réchauffé de manière sensible, est utilisé pour préchauffer, au moins en partie, les produits solides et/ou les gaz introduits dans le réacteur (1).

14. Procédé selon une ou plusieurs des revendications 1 à 13, **caractérisé en ce qu'**il est mis en oeuvre avec une installation qui comporte un réacteur avec ou sans une partie servant à la réduction de la fonte et qui est conçue pour produire une fonte d'acier de manière continue ou semi-continue.

15. Installation pour mettre en oeuvre le procédé selon une ou plusieurs des revendications 1 à 14, présentant la combinaison de caractéristiques suivantes :
• un réacteur avec une alimentation en courant, par exemple par un arc électrique (1). depuis au moins une électrode (3),
• des dispositifs d'alimentation (17, 21) pour un produit à granulométrie fine contenant du fer, pour un produit réducteur à granulométrie fine contenant du carbone et pour un produit à granulométrie fine contenant de l'énergie sous la forme de carbone et dont les ouvertures de sortie (20, 23) se trouvent dans une partie supérieure du réacteur (1) qui, en fonctionnement, est occupée par une couche de laitier mousseux (9),
• au voisinage des dispositifs d'alimentation (17, 21) pour les produits à granulométrie fine, on prévoit des dispositifs d'alimentation (17, 22) pour un gaz, dont les ouvertures (20, 24) soient disposées dans la partie supérieure où se trouve le laitier mousseux (9),
• les dispositifs d'alimentation (17, 21) sont réalisés sous la forme de lances (17) qui présentent des sections transversales partagées, pour le gaz et pour les produits solides, jusqu'à l'ouverture et / ou sous la forme de paires de buses (21, 22) où les ouvertures (24) des dispositifs d'alimentation (22) pour un gaz et les ouvertures d'alimentation (23) pour les produits solides (21) se jouxtent physiquement dans des régions distinctes et délimitées localement, constituant chacune un espaces de réaction.

16. Installation selon la revendication 15, **caractérisée en ce que** le gaz et les produits solides peuvent être amenés par au moins une lance latérale (17) traversant la paroi latérale (16) du réacteur (1) et **en ce que** la lance latérale (17) présente, jusqu'à l'ouverture (20), une section transversale partagée (18, 19) pour le gaz et pour les produits solides.

17. Installation selon l'une des revendications 15 et 16, **caractérisée en ce qu'**au moins une électrode (13) est pourvue d'un évidement longitudinal central (11) dans lequel débouche une conduite d'alimentation (12) pour les produits solides à granulométrie fine et / ou pour le gaz.

18. Installation selon une ou plusieurs des revendications 15 à 17, **caractérisée en ce que** dans le fond (15) du réacteur (1), on prévoit des buses (25), de préférence des buses (25) protégées à hydrocarbure ou alors un élément minéral de purge.

19. Installation selon une ou plusieurs des revendications 15 à 18, **caractérisée en ce que** le dispositif (29) de mesure de niveau servant à mesurer la hauteur (10) de la couche de laitier mousseux (9) se trouvant au-dessus de la fonte de fer (6) comporte un dispositif asservi (30), qui est complé avec les dispositifs d'alimentation (13, 17, 21, 22, 25) pour les produits solides et / ou pour les gaz et / ou pour les mélanges de produits solides et de gaz.

20. Installation selon une ou plusieurs des revendications 15 à 19, **caractérisée en ce que** les ouvertures (20, 24) des dispositifs d'alimentation (17, 22) pour le gaz et les ouvertures (20, 23) des dispositifs d'alimentation (17, 21) pour le produit à granulométrie fine contenant du fer, le produit réducteur et le produit contenant de l'énergie sont orientées en biais, face aux buses du fond (25).
